# FASCICULE DE BREVET EUROPEEN

(11) **EP 3 545 616 B1**
(45) Date de publication et mention de la délivrance du brevet: **31.03.2021**
(21) Numéro de dépôt: 17811992.1
(22) Date de dépôt: 16.11.2017
(51) Int. Cl.: H02P 27/06, H02P 6/16

(54) **PROCÉDÉ DE DECLENCHEMENT D'UN MODE DE COURT CIRCUIT PILOTE POUR LA PROTECTION D'UNE MACHINE ÉLECTRIQUE ET DISPOSITIF DE PROTECTION CORRESPONDANT**
VERFAHREN ZUR AUSLÖSUNG EINES GESTEUERTEN KURZSCHLUSSMODUS FÜR DEN SCHUTZ EINER ELEKTRISCHEN MASCHINE UND ENTSPRECHENDE SCHUTZVORRICHTUNG
METHOD FOR TRIGGERING A CONTROLLED SHORT CIRCUIT MODE FOR PROTECTING AN ELECTRICAL MACHINE AND CORRESPONDING PROTECTION DEVICE

(30) Priorité: 25.11.2016 FR 1661504
(43) Date de publication de la demande: 02.10.2019
(73) Titulaire: Renault SAS, 92100 Boulogne Billancourt (FR); NISSAN MOTOR CO., LTD., Yokohama-shi, Kanagawa 221-0023 (JP)
(72) Inventeur: HANNOUN, Hala, 91190 Gif sur Yvette (FR); MISSOUM, Rachid, 78280 Guyancourt (FR)
(74) Mandataire: Rougemont, Bernard
(86) Numéro de dépôt international: PCT/FR2017/053131
(87) Numéro de publication internationale: WO 2018/096238

(56) Documents cités:
- WO-A1-2016/116671
- DE-A1-102015 205 432
- US-A1- 2013 043 816
- US-A1- 2016 204 720
- US-A1- 2016 303 978

## Description

L'invention concerne un procédé de déclenchement d'un mode de « court-circuit piloté » - ou ASC pour « active short circuit », en anglais - pour une machine électrique à aimants permanents d'un véhicule automobile, en particulier pour une machine synchrone à aimants permanents.

Dans le cadre du développement des véhicules électriques et hybrides, le couple fourni par une machine électrique de type machine synchrone à aimants doit être contrôlé. Le couple d'une machine synchrone est directement lié aux courants circulant dans ses phases. Celui-ci est réalisé au moyen d'un onduleur avec régulation des courants de phase sinusoïdaux synchronisés par rapport à la position relative du rotor par rapport au stator de la machine électrique.

Lorsqu'un défaut fonctionnel est détecté, le système doit pouvoir activer un mode de contrôle sûr, ou mode de refuge, en particulier, le mode « court-circuit piloté » (« active short circuit », en anglais). Les défauts fonctionnels conduisant à l'activation du mode de contrôle sûr peuvent être un sur-courant, une surtension, un défaut de mesure de position du rotor, un défaut d'intégrité logicielle, un défaut batterie.

Ces endommagements peuvent ne pas conduire à un évènement potentiellement sécuritaire, mais le taux d'occurrences de ces défaillances peut être inacceptable en termes de fiabilité du système.

Dans les domaines d'application automobiles connus, en véhicules électriques ou hybrides, un des modes connu pour pallier une défaillance est le mode « court-circuit piloté ».

Les propriétés de ce mode de contrôle sûr sont l'extinction ou la réduction du couple de sortie de la machine et l'extinction très rapide de la puissance électrique.

L'extinction ou réduction du couple de sortie de la machine permettent de respecter les contraintes de sureté de fonctionnement sur les accélérations intempestives.

Plusieurs documents présentent des systèmes de machines électriques ou d'onduleurs robustes à divers types de défaillances. Cette robustesse consiste à maintenir une fonctionnalité minimale malgré la défaillance, au moyen de diverses redondances fonctionnelles.

Le document CN204334268U divulgue un générateur à aimant permanent comprenant un bobinage auxiliaire mis en série avec le bobinage principal servant à limiter le courant pendant les défauts imputables au déclenchement du mode « court-circuit piloté ». En fonctionnement normal, ce bobinage sert à lisser le courant.

Le document DE102011008076 décrit un aimant posé entre deux pôles d'un rotor comprenant chacun une bobine. L'aimant peut servir à court-circuiter un flux généré par les deux bobines en fonction du sens du courant dans les bobines du rotor.

Le document US2016204720 divulgue une chaîne de pilotage d'une machine électrique comprenant un onduleur et une batterie. Dès que le rotor est à l'arrêt, un mode court-circuit est enclenché.

Le document US2016303978 divulgue une chaîne de pilotage d'une machine électrique comprenant un onduleur, des capteurs de tension ou un capteur angulaire, et une batterie. Un mode court-circuit est enclenché si le rotor est dans une position prédéterminée.

Toutefois, aucun de ces documents ne présente de mode refuge, ou de mode de défaillance garantissant la sûreté du système et son intégrité au moyen d'un court-circuit piloté.

L'invention porte donc sur un procédé de déclenchement d'un mode de court-circuit piloté pour la protection d'une chaine de traction électrique d'un véhicule automobile entraîné, au moins partiellement, par une machine électrique, ledit véhicule automobile comprenant une batterie adaptée pour alimenter en courant continu un onduleur prévu pour transformer le courant continu en courant triphasé et alimenter la machine électrique.

Ce procédé de déclenchement d'un mode de court-circuit piloté comporte une première étape de calcul d'une consigne de position du rotor de la machine électrique, une deuxième étape de mesure de la position du rotor, une troisième étape de comparaison de la position mesurée du rotor et de la consigne de position du rotor, et une quatrième étape de déclenchement d'un mode de court-circuit piloté, la consigne de position du rotor correspondant à la position du rotor dans laquelle l'amplitude crête-à-crête du courant triphasé est minimale.

Selon un mode de mise en œuvre du procédé, la première étape de calcul d'une consigne de position du rotor comprend la détermination d'une position du rotor dans laquelle l'amplitude crête-à-crête du courant triphasé est minimale pendant une période transitoire de mise en place du mode de court-circuit piloté.

Selon un autre mode de mise en œuvre du procédé, la première étape est mise en œuvre au moyen d'un calculateur.

Selon une autre caractéristique du procédé, le capteur de position du rotor est un capteur mesurant la rotation du rotor par rapport à une position de référence.

Au cours de ladite troisième étape de comparaison de la position et de la consigne de position du rotor, on peut déterminer si la position du rotor est sensiblement identique à la consigne de position du rotor.

Selon une autre caractéristique du procédé, on passe à la quatrième étape de déclenchement d'un mode de court-circuit piloté si, à la troisième étape, la position du rotor est sensiblement identique à la consigne de position du rotor.

L'invention porte également sur un dispositif de protection d'une chaîne de traction électrique d'un véhicule automobile entraîné, au moins partiellement, par une machine électrique.

Le véhicule automobile comprend en outre une batterie adaptée pour alimenter en courant continu un onduleur prévu pour transformer le courant continu en courant triphasé et alimenter la machine électrique.

Le dispositif comprend des moyens de mesure de la position du rotor de la machine électrique, des moyens pour comparer la position mesurée du rotor avec une consigne de position du rotor et des moyens pour déclencher l'activation d'un mode de court-circuit piloté, la consigne de position du rotor correspondant à la position du rotor dans laquelle l'amplitude crête-à-crête du courant triphasé est minimale.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 représente un circuit électronique d'une partie de la chaîne de traction du véhicule automobile,
- les figures 2A et 2B représentent deux positions différentes du rotor par rapport au stator de la machine électrique,
- la figure 3 illustre l'évolution des trois courants de phase pendant une période transitoire de mise en place d'un mode de court-circuit piloté en fonction du temps.
- la figure 4 illustre l'évolution de l'amplitude crête-à-crête de deux courants de phase pendant une période transitoire de mise en place d'un mode de court-circuit piloté, en fonction de la position relative du rotor par rapport au stator lors du déclenchement du mode de court-circuit piloté,
- la figure 5 représente un dispositif pour la mise en œuvre d'un procédé de déclenchement d'un mode de court-circuit piloté conforme à l'invention, et
- La figure 6 représente la succession des étapes du procédé de déclenchement d'un mode de court-circuit piloté.

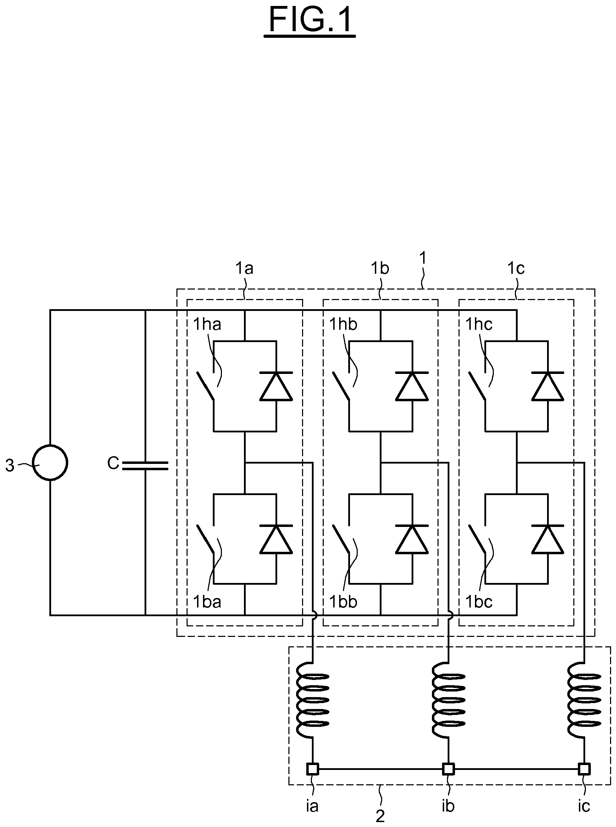

On se référera tout d'abord à la figure 1 qui illustre un circuit électronique d'une partie de la chaîne de traction d'un véhicule automobile à traction au moins partiellement électrique.

Ce circuit est destiné à convertir une tension d'alimentation continue en une tension triphasée pour l'alimentation d'une machine électrique. Il est en particulier destiné à mettre en œuvre un mode de « court-circuit piloté ».

Il comporte un onduleur 1 comprenant un ensemble d'interrupteurs référencés lha, 1hb, 1hc, 1ba, 1bb, 1bc muni chacun d'une diode de roue libre connectée en parallèle.

Les interrupteurs sont connectés en série par paires. L'interrupteur lha raccordé en série avec l'interrupteur 1ba constitue un premier bras la, l'interrupteur 1hb raccordé en série avec l'interrupteur 1bb constitue un deuxième bras 1b, l'interrupteur 1hc raccordé en série avec l'interrupteur 1bc constitue un troisième bras 11.

Les bras la, 1b et 1c sont connectés en parallèle entre eux et avec les entrées de l'onduleur.

Une première sortie de l'onduleur est connectée entre l'interrupteur 1ha et l'interrupteur 1ba, une autre entre l'interrupteur 1hb et l'interrupteur 1bb et une dernière entre l'interrupteur 1hc et l'interrupteur 1bc.

Les sorties de l'onduleur 1 sont connectées à un inducteur 2 d'un machine électrique triphasée.

Les entrées de l'onduleur 1 sont connectées en parallèle d'une capacité C également connectée en parallèle aux bornes d'une batterie 3.

Ce mode de court-circuit piloté consiste en la mise à équipotentiel des phases par la fermeture de tous les interrupteurs haut lha, 1hb et 1hc, ou bien de tous les interrupteurs bas 1ba, 1bb, 1bc.

Avantageusement, en cas de défaillance ou de casse partielle de l'onduleur, on peut garantir le mode court-circuit en changeant le bras réalisant le court-circuit.

Ce mode refuge garantit une rapide et complète isolation de la machine électrique du point de vue de la puissance, et garantit donc la mise à zéro instantanée de la puissance électrique, car aucun courant ne peut remonter en amont de l'onduleur 1. Cela permet donc de couvrir les exigences de sûreté quels que soient la vitesse de la machine électrique et le niveau de flux la traversant.

Cependant, ce mode refuge présente également un inconvénient. A la mise en court-circuit, la machine électrique subit une très forte discontinuité de tension sur les phases, ce qui provoque une augmentation transitoire des courants qui peut être violente pour certains points de fonctionnement. Cette augmentation de courant peut provoquer un endommagement irréversible du système.

Par exemple, il peut s'agir d'une casse de l'onduleur 1 par dépassement du courant de phase maximum admissible ou d'une démagnétisation irréversible partielle des aimants de la machine électrique par dépassement d'un seuil de flux induit par les courants de phase. Ce seuil étant par ailleurs potentiellement abaissé du fait de la température élevée du rotor dans ce contexte.

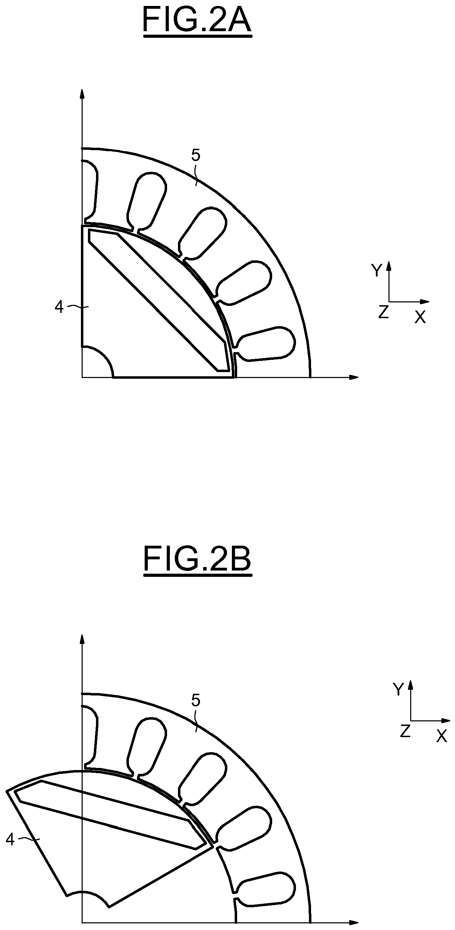

Lors du déclenchement d'un tel mode de court-circuit piloté, le rotor 4 de la machine électrique, encore en rotation, est en effet dans une position aléatoire, par exemple ici représenté alternativement dans deux positions sur les figures 2A et 2B par rapport au stator 5.

Après son déclenchement, le mode de court-circuit piloté connaît une période transitoire pendant laquelle les courants des trois phases peuvent atteindre des valeurs importantes allant de deux à trois fois le courant nominal de la machine électrique ce qui pose les problèmes déjà cités.

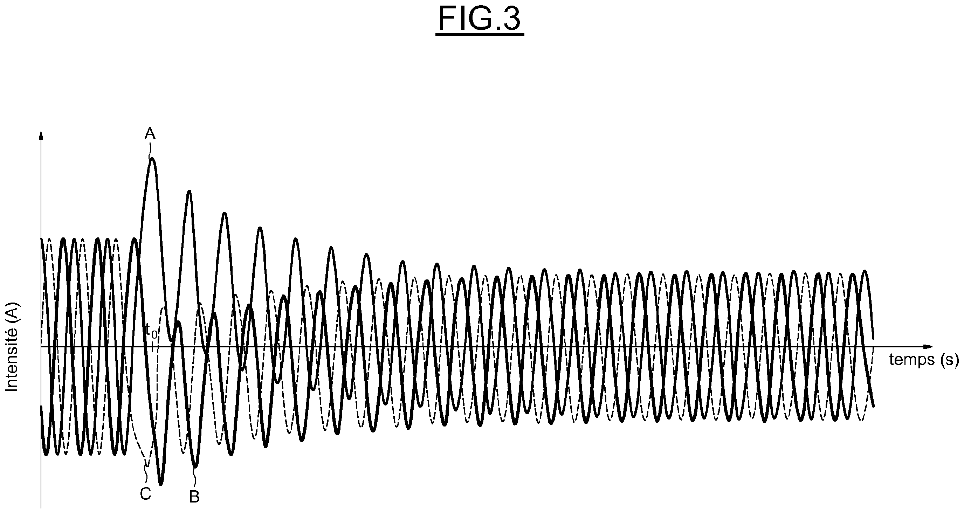

On a représenté sur la figure 3 trois courbes A, B et C respectivement représentatives de l'évolution des trois courants de phase iₐ, i_{b}, i_{c} pendant cette période transitoire commençant à partir du temps to de déclenchement du mode de court-circuit piloté. Passé cet instant, les valeurs d'amplitude des trois courants iₐ, i_{b}, i_{c} décroissent avec le temps après avoir atteint un maximum, appelé valeur «pic de courant», ou amplitude crête à crête.

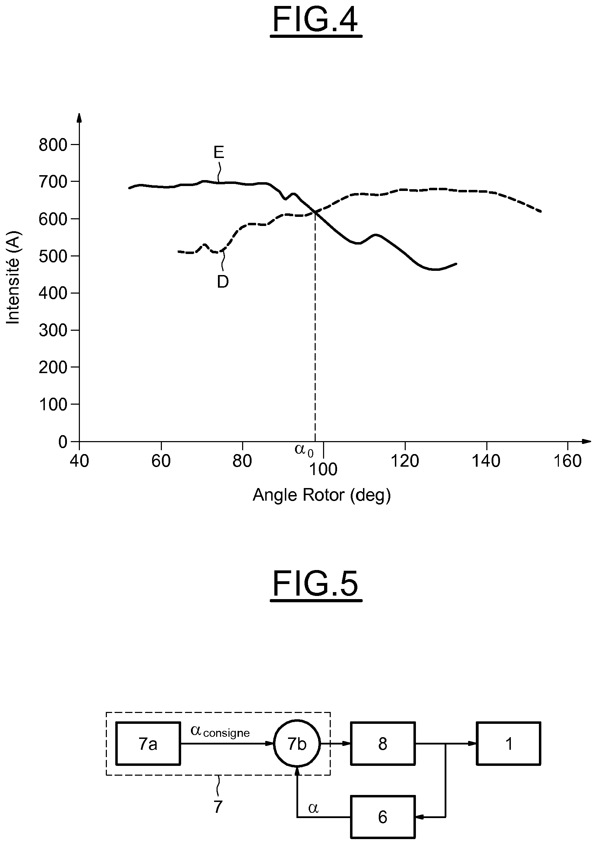

Ces valeurs «pic de courant» de chacun des courants de phases, illustrés par les courbes D et E représentatives des courants iₐ et i_{b} sur la figure 4, dépendent de la position du rotor au moment to du déclenchement du mode court-circuit piloté.

On peut déterminer expérimentalement, ou par calcul, une position correspondant à une rotation d'angle ao du rotor 4 par rapport au stator 5 à l'instant to qui minimise ce «pic de courant». On a représenté les «pic de courant» des courants iₐ et i_{b} sur les courbes D et E pour différentes positions du rotor 4 pour mettre en évidence le minimum des «pic de courant» lorsque le rotor 4 est à la position correspondant, notamment sensiblement, à la rotation d'angle ao.

On a représenté sur la figure 5 les éléments structurels d'un dispositif pour la mise en œuvre d'un procédé de déclenchement d'un mode de court-circuit piloté conforme à l'invention.

Ce dispositif comporte un premier calculateur 7a apte à élaborer une consigne de position α_{consigne} du rotor de la machine, un capteur 6 de mesure de la valeur d'angle α de la position relative du rotor par rapport au stator 5 de la machine électrique et un deuxième calculateur 7b apte à comparer la position mesurée α du rotor 4 avec la consigne de position. Il comporte en outre un étage de commande 8 relié à l'onduleur 1 et pilotant les interrupteurs de l'onduleur pour transformer le courant continu en courant triphasé et alimenter la machine électrique.

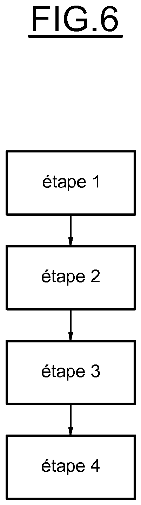

On se référera finalement à la figure 6 qui illustre le déroulement des étapes successives du procédé de déclenchement d'un mode de court-circuit piloté conforme à l'invention.

La valeur ao peut être utilisée, lors d'une première étape, pour déterminer au moyen du premier calculateur 7a une consigne de position α_{consigne} du rotor de la machine électrique. On mesure au cours d'une deuxième étape une valeur d'angle α représentative de la position relative du rotor 4 par rapport au stator 5 de la machine électrique au moyen d'un capteur dédié 6.

Au moyen du deuxième calculateur 7b, on compare lors d'une troisième étape la position mesurée α et de la consigne de position α_{consigne} et on commande, le cas échéant, au cours d'une quatrième étape, le déclenchement du mode de court-circuit piloté précédemment décrit au moyen de l'étage de commande 8.

Cet étage de commande 8 est un dispositif permettant d'ouvrir ou fermer au moins séparément tous les interrupteurs haut lha, 1hb et 1hc de l'onduleur, ou bien tous les interrupteurs bas 1ba, 1bb et 1bc.

Les calculateurs 7a et 7b peuvent être regroupés au sein d'un unique calculateur 7. Une telle application exigerait une solution matérielle de type logique câblée (FPGA).

En dehors de la traction électrique, cette solution peut convenir à tout système d'actionneur avec machine synchrone à aimants permanents, nécessitant une mise en état sûr de coupure de puissance rapide par un mode refuge basique réalisable par hardware.

## Revendications

1. Procédé de déclenchement d'un mode de court-circuit piloté pour la protection d'une chaine de traction électrique d'un véhicule automobile entraîné, au moins partiellement, par une machine électrique, ledit véhicule automobile comprenant une batterie (3) adaptée pour alimenter en courant continu un onduleur (1) prévu pour transformer le courant continu en courant triphasé et alimenter la machine électrique, comportant une première étape de calcul d'une consigne de position (α_{consigne}) du rotor de la machine électrique, une deuxième étape de mesure de la position (α) du rotor, une troisième étape de comparaison de la position mesurée du rotor et de la consigne de position du rotor, et une quatrième étape de déclenchement d'un mode de court-circuit piloté, ledit procédé étant **caractérisé en ce que** ladite consigne de position du rotor correspond à la position du rotor dans laquelle l'amplitude crête-à-crête du courant triphasé est minimale.

2. Procédé selon la revendication 1, dans lequel ladite première étape de calcul d'une consigne de position (α_{consigne}) du rotor comprend la détermination d'une position (α₀) du rotor dans laquelle l'amplitude crête-à-crête du courant triphasé est minimale pendant une période transitoire de mise en place du mode de court-circuit piloté.

3. Procédé selon l'une quelconque des revendications 1 à 2, dans lequel la première étape est mise en œuvre au moyen d'un calculateur (7).

4. Procédé selon l'une quelconque des revendications précédentes, dans lequel le capteur de position du rotor est un capteur (6) mesurant la rotation du rotor par rapport à une position de référence.

5. Procédé selon l'une quelconque des revendications précédentes, dans lequel au cours de ladite troisième étape de comparaison de la position et de la consigne de position du rotor on détermine si la position du rotor est sensiblement identique à la consigne de position du rotor.

6. Procédé selon l'une quelconque des revendications précédentes, dans lequel on passe à la quatrième étape de déclenchement d'un mode de court-circuit piloté si, à la troisième étape, la position du rotor est sensiblement identique à la consigne de position du rotor.

7. Dispositif de protection d'une chaîne de traction électrique d'un véhicule automobile entraîné, au moins partiellement, par une machine électrique, ledit véhicule automobile comprenant une batterie adaptée pour alimenter en courant continu un onduleur (1) prévu pour transformer le courant continu en courant triphasé et alimenter la machine électrique, le dispositif comprenant des moyens de mesure (6) de la position du rotor de la machine électrique, des moyens pour comparer (7) la position mesurée du rotor avec une consigne de position du rotor et des moyens pour déclencher (8) l'activation d'un mode de court-circuit piloté, **caractérisé en ce que** ladite consigne de position du rotor correspond à la position du rotor dans laquelle l'amplitude crête-à-crête du courant triphasé est minimale.

## Patentansprüche

1. Verfahren zur Auslösung eines aktiven Kurzschlussmodus zum Schutz eines elektrischen Antriebsstranges eines Kraftfahrzeugs, das wenigstens teilweise von einer elektrischen Maschine angetrieben wird, wobei das Kraftfahrzeug eine Batterie (3) umfasst, die dafür eingerichtet ist, einen Wechselrichter (1) mit Gleichstrom zu versorgen, der dafür vorgesehen ist, den Gleichstrom in Dreiphasenwechselstrom umzuwandeln und die elektrische Maschine zu versorgen, umfassend einen ersten Schritt der Berechnung eines Positionssollwertes (α_{Soll}) des Rotors der elektrischen Maschine, einen zweiten Schritt der Messung der Position (α) des Rotors, einen dritten Schritt des Vergleichs der gemessenen Position des Rotors und des Positionssollwertes des Rotors und einen vierten Schritt der Auslösung eines aktiven Kurzschlussmodus, wobei das Verfahren **dadurch gekennzeichnet ist, dass** der Positionssollwert des Rotors der Position des Rotors entspricht, in welcher die Spitze-Spitze-Amplitude des Dreiphasenwechselstroms minimal ist.

2. Verfahren nach Anspruch 1, wobei der erste Schritt der Berechnung eines Positionssollwertes (α_{Soll}) des Rotors die Bestimmung einer Position (α₀) des Rotors umfasst, in welcher die Spitze-Spitze-Amplitude des Dreiphasenwechselstroms während eines Übergangszeitraums der Implementierung des aktiven Kurzschlussmodus minimal ist.

3. Verfahren nach einem der Ansprüche 1 bis 2, wobei der erste Schritt mittels eines Rechners (7) durchgeführt wird.

4. Verfahren nach einem der vorhergehenden Ansprüche, wobei der Positionssensor des Rotors ein Sensor (6) ist, der die Drehung des Rotors in Bezug auf eine Referenzposition misst.

5. Verfahren nach einem der vorhergehenden Ansprüche, wobei im dritten Schritt des Vergleichs der Position und des Positionssollwertes des Rotors bestimmt wird, ob die Position des Rotors im Wesentlichen identisch mit dem Positionssollwert des Rotors ist.

6. Verfahren nach einem der vorhergehenden Ansprüche, wobei zum vierten Schritt der Auslösung eines aktiven Kurzschlussmodus übergegangen wird, falls im dritten Schritt die Position des Rotors im Wesentlichen identisch mit dem Positionssollwert des Rotors ist.

7. Vorrichtung zum Schutz eines elektrischen Antriebsstranges eines Kraftfahrzeugs, das wenigstens teilweise von einer elektrischen Maschine angetrieben wird, wobei das Kraftfahrzeug eine Batterie umfasst, die dafür eingerichtet ist, einen Wechselrichter (1) mit Gleichstrom zu versorgen, der dafür vorgesehen ist, den Gleichstrom in Dreiphasenwechselstrom umzuwandeln und die elektrische Maschine zu versorgen, wobei die Vorrichtung Mittel zur Messung (6) der Position des Rotors der elektrischen Maschine, Mittel zum Vergleichen (7) der gemessenen Position des Rotors mit einem Positionssollwert des Rotors und Mittel zum Auslösen (8) der Aktivierung eines aktiven Kurzschlussmodus umfasst, **dadurch gekennzeichnet, dass** der Positionssollwert des Rotors der Position des Rotors entspricht, in welcher die Spitze-Spitze-Amplitude des Dreiphasenwechselstroms minimal ist.

## Claims

1. Method for triggering a controlled short-circuit mode for the protection of an electric traction chain of a motor vehicle driven, at least partially, by an electric machine, said motor vehicle comprising a battery (3) suitable for supplying direct current to an inverter (1) designed to transform the direct current into three-phase current and supply the electric machine with power, comprising a first step of calculating a position setpoint (αₛₑₜₚₒᵢₙₜ) for the rotor of the electric machine, a second step of measuring the position (α) of the rotor, a third step of comparing the measured position of the rotor and the position setpoint for the rotor, and a fourth step of triggering a controlled short-circuit mode, said method being **characterized in that** said position setpoint for the rotor corresponds to the position of the rotor in which the peak-to-peak amplitude of the three-phase current is minimum.

2. Method according to Claim 1, wherein said first step of calculating a position setpoint (αₛₑₜₚₒᵢₙₜ) for the rotor comprises determining a position (α₀) of the rotor in which the peak-to-peak amplitude of the three-phase current is minimum during a transitional period of setting up the controlled short-circuit mode.

3. Method according to either one of Claims 1 and 2, wherein the first step is performed by means of a computer (7) .

4. Method according to any one of the preceding claims, wherein the rotor position sensor is a sensor (6) that measures the rotation of the rotor with respect to a reference position.

5. Method according to any one of the preceding claims, wherein, in said third step of comparing the position of the rotor and the position setpoint for the rotor, it is determined whether the position of the rotor is substantially identical to the position setpoint for the rotor.

6. Method according to any one of the preceding claims, wherein the method moves on to the fourth step of triggering a controlled short-circuit mode if, in the third step, the position of the rotor is substantially identical to the position setpoint for the rotor.

7. Protection device for an electric traction chain of a motor vehicle driven, at least partially, by an electric machine, said motor vehicle comprising a battery suitable for supplying direct current to an inverter (1) designed to transform the direct current into three-phase current and supply the electric machine with power, the device comprising means (6) for measuring the position of the rotor of the electric machine, means (7) for comparing the measured position of the rotor with a position setpoint for the rotor and means (8) for triggering the activation of a controlled short-circuit mode, **characterized in that** said position setpoint for the rotor corresponds to the position of the rotor in which the peak-to-peak amplitude of the three-phase current is minimum.
